# EUROPÄISCHE PATENTANMELDUNG

(11) **EP 1 803 600 A2**
(43) Veröffentlichungstag der Anmeldung: **04.07.2007**
(21) Anmeldenummer: 06025200.4
(22) Anmeldetag: 06.12.2006
(51) Int. Cl.: B60J 7/00, B60J 1/20

(54) **Rollo mit vereinfachter Montage der Wickelwelle**

(30) Priorität: 28.12.2005 DE 102005062973
(71) Anmelder: BOS GmbH & Co. KG, 73760 Ostfildern (DE)
(72) Erfinder: Heinrich, Isidor, 73728 Esslingen (DE); Kerzbeck, Harald, 73733 Esslingen (DE)
(74) Vertreter: Rüger, Barthelt & Abel Patentanwälte

(57) **Zusammenfassung**

Ein Fensterrollo, insbesondere ein Dachfensterrollo weist eine Wickelwelle (25) auf, die auf einem Lagerstück (50) drehbar gelagert ist. An dem Lagerstück (50) ist der Federmotor (54) zum Vorspannen der Wickelwelle (25) verankert. Das Lagerstück (50) ist mit einem flachkantigen Zapfen (59) versehen, der in einen an einem Ende offenen Schlitz (66) eingeführt wird. Durch die Kraft des Federmotors (54) wird der Zapfen (59) gegen das geschlossene Ende (68) des Schlitzes (66) dauerhaft und klapperfrei festgehalten.

## Beschreibung

Fensterrollos in Kraftfahrzeugen sind mittlerweile nicht nur der oberen Preisklasse vorbehalten. Sie werden zunehmend auch in mittleren und unteren Preissegmenten eingesetzt, was bedeutet, dass die Konstrukteure insbesondere darum bemüht sein müssen, die Montagekosten zu reduzieren.

Die Fensterrollos in Kraftfahrzeugen weisen eine biegeschlaffe Rollobahn auf, die mit einer Kante an einer Wickelwelle befestigt ist. Der Zuschnitt der Rollobahn entspricht der von geraden Kanten begrenzten Annäherung an die abzuschattende Fensterfläche.

Um die Rollobahn auf der Wickelwelle wieder aufwickeln zu können, werden in der Regel Federmotoren verwendet. Diese Federmotoren sind für gewöhnlich relativ lange Schraubenfedern, die als Torsionsfedern verwendet werden. Ein Ende der Schraubenfeder ist in der Wickelwelle festgelegt, während das andere Ende über einen Lagerzapfen der Wickelwelle an der Karosserie angebunden ist.

Diese Art der Wickelwellen-Vorspannung wird sowohl bei manuellem Rollos verwendet als auch bei elektrisch betriebenen. Bei elektrisch betriebenen Rollos wird das Auszugsprofil endseitig in Führungsschienen geführt und mit Hilfe eines Getriebemotors unter Zwischenschaltung von bowdenzugähnlichen Anordnungen hin und her bewegt.

Die Montage der Wickelwelle ist dabei einer jener Schritte, die kostenrelevant sind.

Ausgehend hiervon ist es Aufgabe der Erfindung, eine Rolloanordnung zu schaffen, bei der die Wickelwellenmontage vereinfacht ist.

Diese Aufgabe wird erfindungsgemäß mit der Rolloanordnung mit den Merkmalen des Anspruches 1 gelöst.

Die Rolloanordnung weist eine Rollobahn auf, deren Zuschnitt an das zu beschattende Fenster angepasst ist. An einer Kante der Rollobahn ist das Auszugsprofil befestigt, während an der anderen Kante die Wickelwelle angebracht ist. In der Wickelwelle befindet sich ein Federmotor, der mit seinem in der Wickelwelle liegenden Ende an der Wickelwelle verankert ist. Zur drehbaren Lagerung der Wickelwelle ist ein Lagerstück vorhanden, an dem der Federmotor mit dem anderen Ende befestigt ist. Dieses Lagerstück weist einen über die Wickelwelle überstehenden profilierten Zapfen auf.

Ein in der Karosserie oder einem Zwischengestell vorhandener Halter enthält einen an einem Ende offenen Schlitz. Die Weite des Schlitzes ist an die Dicke des seitlich abgeflachten Zapfens angepasst, der durch seine Abflachungen in dem Schlitz drehgesichert gehalten ist. Am Ende des Schlitzes befindet sich ein Anschlag, der so ausgerichtet ist, dass durch die Rückzugskraft, die in der Rollobahn durch den Federmotor hervorgerufen wird, der Zapfen an der Anschlagfläche gehalten ist.

Das andere Ende der Wickelwelle kann in der gleichen Weise gelagert sein oder auch einen einfachen rotationssymmetrischen Zapfen aufweisen, der in eine ortsfeste Lagerbohrung eingesteckt wird.

Die Montage dieser Anordnung ist deswegen wesentlich vereinfacht, weil es genügt, zur Montage der Wickelwelle den anderen Zapfen in die Bohrung einzustecken und den flachen Zapfen in den Schlitz einzuführen. Durch den Federmotor in Verbindung mit dem Auszugsprofil, das sich an festen Anschlägen anlegt oder reibschlüssig gehalten wird, wird die Wickelwelle auch im Bereich des Schlitzes fixiert. Zusätzliche Befestigungsmaßnahmen sind nicht erforderlich.

Eine mit einer solchen Wickelwelle ausgestattet Rolloanordnung kann manuell betätigt sein oder auch elektrisch. Im ersteren Falle genügt es, an dem Auszugsprofil einen entsprechenden Griff vorzusehen. Im anderen Falle sind zweckmäßigerweise Führungsschienen vorgesehen, zwischen denen das Auszugsprofil geführt ist.

Die erfindungsgemäße Verankerung der Wickelwelle ist auch dann besonders von Vorteil, wenn das betreffende Wickelwellenlager von der Seite her im eingebauten Zustand aufgrund von beengten Platzverhältnissen praktisch nicht zugänglich ist.

Zum Antrieb eines elektrischen Rollos kommen die aus der Praxis bekannten Anordnungen in Frage. Diese bestehen üblicherweise in Kabel- oder Bowdenzügen, die in den Führungsschienen geführt sind und die über einen Linearantrieb in Gang gesetzt werde.

Eine besonders sichere Halterung des Zapfens wird erreicht, wenn der Schlitz abgewinkelt verläuft. Der abgewinkelte Bereich weist eine Länge oder Tiefe auf, die der grö-βeren Querschnittsabmessung des Zapfens entspricht. Dies gewährleistet auch eine besonders klapperfreie Halterung. Eine andere Möglichkeit den Zapfen sicher zu halten besteht darin, am Ende des Schlitzes eine Öffnung vorzusehen, die sich gleichsam aus zwei Sektoren zusammensetzt, die sich diametral gegenüber liegen. In diese Sektoren rastet der abgeflachte Zapfen ein und dieser ist darin praktisch nicht demontierbar aufgenommen.

Die Montage lässt sich weiter vereinfachen, wenn dem Federmotor eine Sperr- oder Blockiereinrichtung zugeordnet ist, die nach der Montage dauerhaft gelöst wird. Eine solche Blockiereinrichtung kann beispielsweise in miteinander fluchtenden Bohrungen in dem Lagerstück und in der Wickelwelle bestehen, in die ein Dorn eingesetzt wird, der eine Drehung des Lagerstücks gegenüber der Wickelwelle zufolge der Vorspannkraft aufgezogenen Schraubenfeder blockiert. Jede andere Art von Blockiereinrichtung nach dem Stand der Technik ist ebenfalls möglich.

Eine besonders günstige Anwendung findet sich im Dachfenster von Limousinen.

Im Übrigen sind Weiterbildungen der Erfindung Gegenstand von Unteransprüchen.

Beim Durchlesen der Figurenbeschreibung wird im Übrigen klar, dass es sich hierbei um ein bevorzugtes Ausführungsbeispiel handelt, das in vielfältiger Weise abgewandelt werden kann, da in dem Ausführungsbeispiel lediglich die Grundprinzipien erläutert sind.

In der Zeichnung ist ein Ausführungsbeispiel des Gegenstandes der Erfindung dargestellt. Es zeigen:
- Fig. 1: ein Kraftfahrzeug in einer Draufsicht von oben unter Veranschaulichung des im Dach vorhandenen Dachfensters;
- Fig. 2: den prinzipiellen Aufbau des Dachfensterrollos nach Fig. 1;
- Fig. 3: eine Ausschnittsdarstellung der Wickelwelle in Verbindung mit dem Halter in einer perspektivischen Ansicht;
- Fig. 4: den eingehängten Zapfen der Anordnung nach Fig. 3, in einer Seitenansicht; und
- Fig. 5: ein weiteres Ausführungsbeispiel für den Schlitz, in einer Seitenansicht.

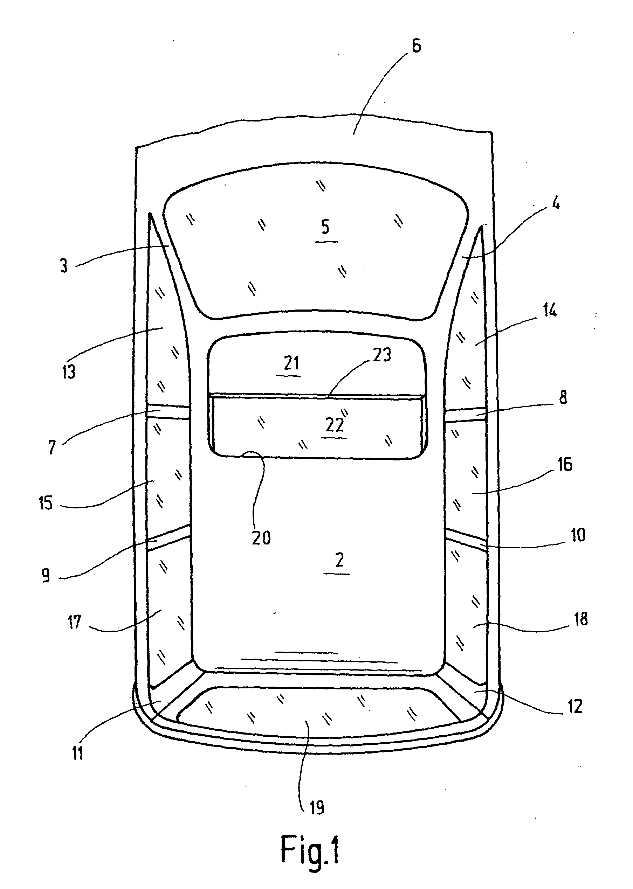

Fig. 1 zeigt in einer schematisierten Draufsicht einen Kombi-PKW 1. Zu erkennen ist sein Dach 2, von dem an der Vorderkante zwei A-Säulen 3 und 4 ausgehen. Zwischen den beiden A-Säulen 3 und 4 befindet sich eine Windschutzscheibe 5, die an der Unterkante in eine Kühlerhaube 6 übergeht. Nach hinten folgen auf die beiden A-Säulen 3 und 4 B-Säulen 7 und 8, C-Säulen 9 und 10 sowie D-Säulen 11 und 12. Zwischen den Säulen 3 .. 12 sind vordere Seitenscheiben 13, 14, hintere Seitenscheiben 15, 16 und Seitenscheiben des Kofferraums 17, 18 zu erkennen. Den Abschluss bildet eine Heckscheibe 19, die zwischen den beiden D-Säulen 11, 12 vorhanden ist.

Im vorderen Bereich des Daches 2 ist angrenzend an die Frontscheibe 5 eine Dachöffnung 20 enthalten, in der sich ein Dachfenster 21 befindet. Das Dachfenster 21 kann ein Glasschiebedach oder ein Glashubdach sein. Es kann sich um ein Glasdach handeln, das beide Funktionen miteinander verbindet.

Unterhalb des Glasdaches 21 ist eine teilweise ausgezogenen Rollobahn 22 zu erkennen. Die Rollobahn 22 ist an einem Auszugsprofil 23 befestigt.

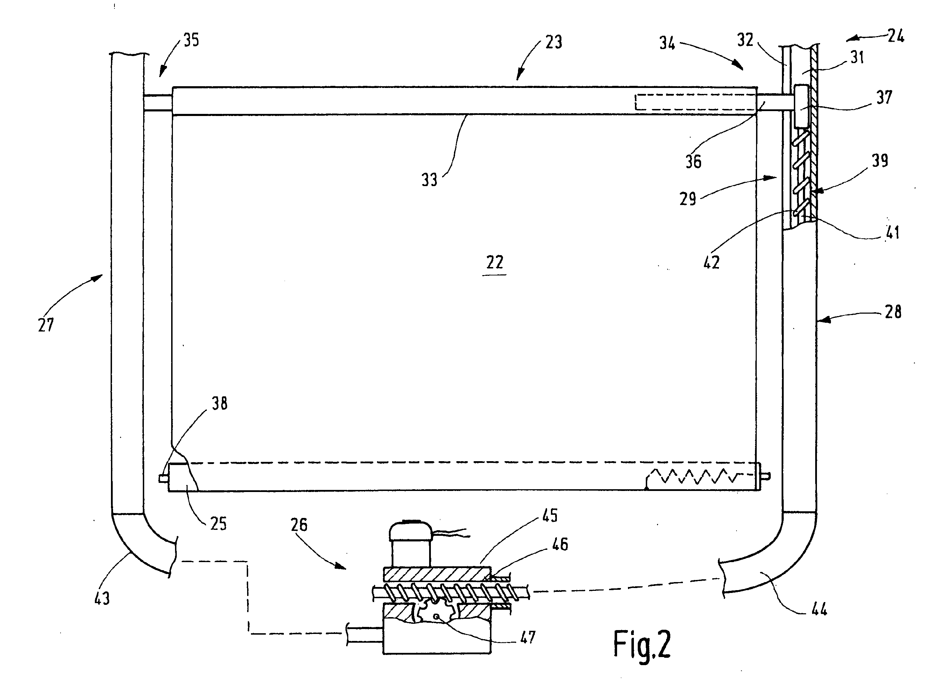

Fig. 2 zeigt den grundsätzlichen Aufbau einer Rolloanordnung 24, wie sie in Verbindung mit dem Dachfenster 21 verwendet wird.

Zu der Rolloanordnung 24 gehört das bereits erwähnte Auszugsprofil 23, die daran befestigte Rollobahn 22, eine Wickelwelle 25, ein Getriebemotor 26 sowie zwei Führungsschienen 27 und 28.

Die Führungsschienen 27 und 28 verlaufen parallel zu der jeweils benachbarten Seitenkante des Dachfensters 21, das eine angenähert rechteckige Gestalt hat. Aus optischen Gründen sind bei der praktischen Ausführung die beiden Führungsschienen 27 und 28 im Dachhimmel des PKW 1 integriert, um möglichst wenig störend in Erscheinung zu treten. Die beiden Führungsschienen 27 und 28 sind zueinander spiegelbildlich ausgeführt, so dass es genügt, den Aufbau der Führungsschiene 28 im einzelnen zu erläutern. Die Detailbeschreibung gilt sinngemäß auch für die andere Führungsschiene 27.

Die Führungsschiene 28 enthält eine Führungsnut 29, die sich im Querschnitt gesehen aus einer Nutenkammer 31 und einem Nutenschlitz 32 zusammensetzt. Der Nutenschlitz 32 zeigt in Richtung auf die gegenüberliegende Führungsschiene 27.

Das Auszugsprofil 23 setzt sich aus einem Mittelstück 33 mit unveränderlicher Länge und zwei teleskopisch verschiebbaren Endstücken 34 und 35 zusammen. Die Breite des Mittelstücks 33 entsprich der Breite des rechteckigen Zuschnittes der Rollobahn 22, die wiederum an die Breite des Dachfensters 21 angepasst ist, um das Dachfenster 21 möglichst über die gesamte Breite abschatten zu können.

Da vom Grundsatz her die beiden Führungsschienen 27 und 28 an sich parallel zueinander verlaufen, kann der Bewegungshub der beiden Endstücke 34 und 35 gering bemessen sein, um lediglich Parallelitäts- und Montagetoleranzen zwischen den beiden Führungsschienen 27 und 28 auszugleichen.

Auch die Endstücke 34, 35 sind zueinander spiegelbildlich, so dass die ausführliche Erläuterung des Endstücks 34 genügt. Zu dem Endstück 34 gehört eine als Flachkant ausgebildete Stange 36, die in einem nicht weiter gezeigten Aufnahmeraum des Mittelstücks 33 ein kurzes Stück weit verschiebbar ist. Die Stange 36 führt durch den Führungsschlitz 32 hinein und trägt an ihrem in der Nutenkammer 31 liegenden Ende ein Gleitstück 37. Das Gleitstück 37 weist einen Querschnitt auf, derart, dass es klemmfrei in der Nutenkammer 31 gleiten kann.

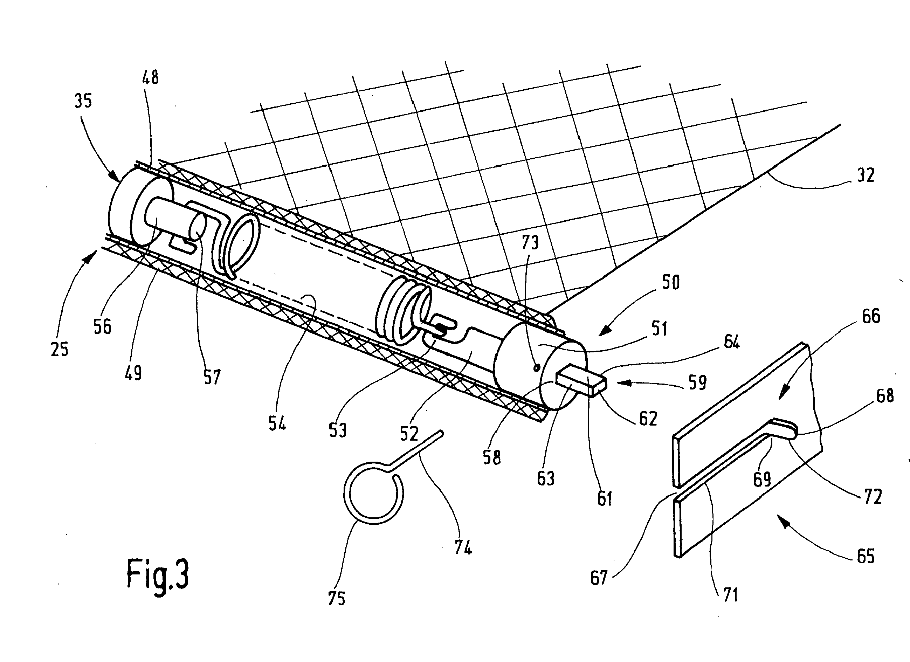

Am in Fig. 2 unten liegenden Ende, das bezogen auf die Fahrzeuggeometrie gemäß Fig. 1 nach hinten zeigt, ist in bekannter Weise die Wickelwelle 25 befestigt. Die Welle 25 ist mittels eines Zapfens 38 in bekannter Weise in einer zylindrischen Bohrung eines Halters, der im Einzelnen nicht gezeigt ist, drehbar gelagert. Die Lagerung des anderen Endes ist ausführlich in Verbindung mit Fig. 3 beschrieben.

Um die Antriebskraft von dem Getriebemotor 26 auf das Auszugsprofil 23 zu übertragen, befindet sich in der Führungskammer 31 jeder Führungsschiene 27, 28 ein ausknicksicher geführtes Schubglied 39. Die Schubglieder 39 sind biegeelastisch und setzen sich aus einer im Querschnitt kreisförmigen Seele 41 und einer darauf aufgebrachten Wendel 42 zusammen. Die Wendel 42 bildet auf der Außenseite der Seele 41 eine über die Länge durchlaufende schräge Rundumverzahnung. Mit anderen Worten, das Schubglied 39 ist eine biegsame rundum verzahnte Zahnstange. Das Schubglied 29 liegt mit seinem freien Ende an dem benachbarten Ende des Gleitstücks 37 an.

Wie erwähnt werden die beiden Schubglieder 29 über den Getriebemotor 26 bewegt, weshalb vom unteren Ende jeder Führungsschiene 27, 28 ein Führungsrohr 43, 44 zu dem Getriebemotor 26 läuft. Dieser umfasst ein Getriebegehäuse 45, durch das achsparallel zwei Bohrungen 46 führen, von denen wegen der teilweise aufgeschnittenen Darstellung lediglich eine zu erkennen ist. Die Bohrungen 46 laufen tangential an einem Ausgangszahnrad 47 vorbei, das in die Verzahnung der beiden Schubglieder 39 eingreift.

Da die beiden Schubglieder an diametral gegenüberliegenden Seiten mit dem selben Ausgangszahnrad 47 kämmen, werden sie in entgegengesetzter Richtung jeweils um gleiche Beträge bewegt, wenn das Ausgangszahnrad 47 gedreht wird. Der nicht benötigte Teil jedes Schubgliedes 39 läuft in ein nicht weiter gezeigtes Speicherrohr.

Anhand von Fig. 3 ist nunmehr die Halterung des rechten Endes der Wickelwelle 25 gezeigt. Die Wickelwelle 25 weist ein durchgehendes im wesentlichen zylindrisches Rohr auf, das gegebenenfalls eine durchgehende Kedernut enthält, um darin das betreffende Ende der Rollobahn 22 befestigen zu können.
Aus der Darstellung sind allerdings die Kedernut und andere Maßnahmen zur Befestigung der Rollobahn nicht gezeigt, da dies für das Verständnis der Erfindung nicht wesentlich ist. Die Darstellung beschränkt sich deswegen auch auf die vereinfachte Veranschaulichung der Wickelwelle 25 in Gestalt eines einfachen glatt durchgehenden zylindrischen Rohres 48. Ferner sind alle solche Teile weggelassen, die die Wickelwelle 25 in axialer Richtung sichern, da auch dies für das Verständnis der Erfindung nicht von Bedeutung ist.

Je nach Aufwickelzustand bildet die Rollobahn 22 auf dem Rohr 48 der Wickelwelle 25 einen mehr oder weniger dicken Ballen 49.

Wie aus der Fig. 3 zu erkennen ist, steckt zur Lagerung des Wickelwellenrohres 48 in diesem ein zylindrisches Lagerstück 50 mit einer zylindrischen Außenumfangsfläche 51. Die Außenumfangsfläche 51 des Lagerstücks 50 passt so in das Wickelwellenrohr 48, dass das Wickelellenrohr 48 auf dem im wesentlichen zylindrischen Lagerstück 50 frei drehbar ist. Zur Innenseite hin verlängert sich das Lagerstück 50 in einem Zapfen 52, der einen Haken 53 trägt. In diesen Haken 53 ist eine Schraubenfeder 54 einends eingehängt, die als Federmotor dient und die Wickelwelle 25 gegenüber dem Lagerstück 51 im Sinne des Aufwickelns der Rollobahn 22 auf die Wickelwelle 25 vorspannt.

Um das Drehmoment von der Schraubenfeder 54 auf das Wickelwellenrohr 48 zu übertragen, sitzt tief in dem Wickelwellenrohr 58 ein Widerlagerstück 55, das mit dem Wickelwellenrohr 48 drehfest verbunden ist, beispielsweise durch Prägen von Sicken. Das Widerlagerstück 55 trägt einen Zapfen 56 mit einem am freien Ende vorgesehenen Haken 57, ähnlich dem Haken 53. In diesen Haken 57 ist das andere entsprechend abgewinkelte Ende der Schraubenfeder 54 eingehängt.

Das Lagerstück 51 schaut mit seiner Außenseite 58 axial aus dem Wickelwellenrohr 48 vor. Die Außenseite 58 trägt koaxial zu der Außenumfangsfläche 51 einen Verankerungszapfen 59.

Der Befestigungszapfen 59 weist zwei parallel zueinander verlaufende Flachseiten 61 und 62 auf, die symmetrisch zu der Längsachse des Verankerungszapfens 59 und des Wickelwellenrohrs 48 liegen. Zwischen den Flachseiten 61 und 62 erstrecken sich teilzylindrisch gekrümmte Seitenflächen 63 und 64. Der Abstand, den die beiden Seitenflächen 63 und 64 voneinander haben, ist deutlich größer als der Abstand der beiden Flachseiten 41 und 42 voneinander. Jede Flachseite definiert eine ebene Fläche.

Auf diese Weise wird ein Flachkant erhalten, der drehfest zu verankern ist.

Das Widerlager für den Verankerungszapfen 59 ist beispielsweise eine im Kraftfahrzeug befestigte Lasche 65, die einen Aufnahmeschlitz 66 enthält. Der Aufnahmeschlitz 66 ist einends bei 67 offen und bei 68 geschlossen. Von dem offenen Ende 67 führt der spaltförmige Schlitz ein Stück weit in die plattenförmige Lasche 65 hinein, bis zu einer Übergangsstelle 69. An der Übergangsstelle 69 knickt der spaltförmige Schlitz 66 wie gezeigt um ca. 45° schräg nach unten ab. Die Übergangsstelle 69 teilt somit den gesamten spaltförmigen Schlitz in einen Abschnitt 71 und einen Abschnitt 72.

Die Weite des Schlitzes 66 entspricht dem Abstand, den die beiden Flachseiten 61 und 62 voneinander haben. Der Zapfen 59 kann somit, ohne dass er sich zu drehen vermag, von dem offenen Ende 67 her in den Schlitzabschnitt 71 eingeschoben werden. An der Übergangsstelle 69 ist die Schlitzgeometrie so gestaltet, dass hier der Verankerungszapfen 59 sich um seine Längsachse geringfügig drehen kann um in den Schlitzabschnitt 72 zu gelangen. Wenn er sich in dem Schlitzabschnitt 72 befindet, liegt er beispielsweise mit der Seitenfläche 64 an dem geschlossenen Ende 68 an, während die gegenüberliegende Seitenfläche 63 im wesentlichen an der gegenüberliegenden Wand des Schlitzabschnittes 71 anliegt.

Damit während der Montage sich nicht der Federmotor ungewollt entspannt, ist zusätzlich eine Blockiereinrichtung vorgesehen. Hierzu kann jede Art von Blockiereinrichtung verwendet werden, wie sie die Anmelderin in anderen Anwendungsfällen einsetzt und zu denen sie einen entsprechenden Stand der Technik geschaffen hat. Im vorliegenden Falle beschränkt sich deswegen die Erläuterung der Blockiereinrichtung auf eine besonders einfache Variante, die ebenfalls verwendet wird.

Die Blockiereinrichtung besteht darin, dass eine Rotation des Wickelwellenrohrs 48 gegenüber dem Lagerstück 50 verhindert wird. Hierzu enthält das Lagerstück 50 in der Nähe der Außenseite 58 eine Bohrung 73, die in einer Drehstellung des Wickelwellenrohrs 48 mit einer entsprechenden Bohrung in diesem fluchtet. Wegen der abgeschnittenen Darstellung ist die korrespondierende Bohrung in dem Wickelwellenrohr 48 nicht erkennbar.

Zum Blockieren einer Relativdrehung zwischen dem Lagerstück 50 und dem Wickelwellenrohr 48 ist ein länglicher Stift 74 vorgesehen, der mit einem Handgriff 75 versehen ist. Im Blockierzustand führt er durch beiden Bohrungen.

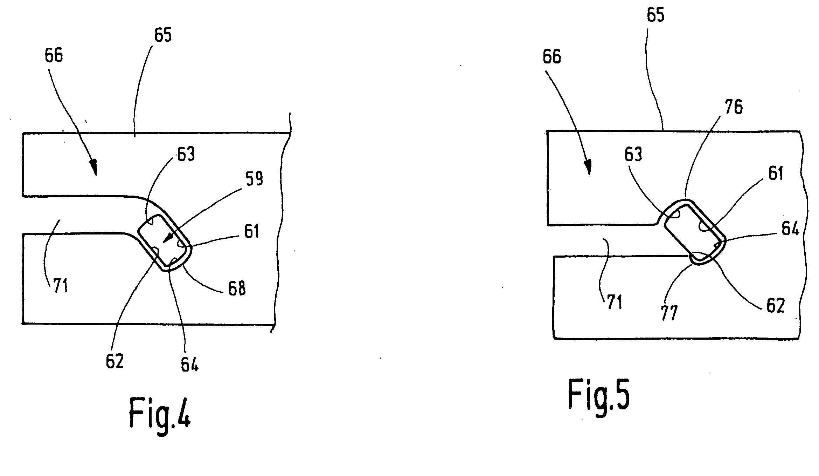

Fig. 4 zeigt in einer Seitenansicht die Relativstellung zwischen dem Verankerungszapfen 59 und dem Schlitz 66, wenn die Wickelwelle 25 montiert ist.

Fig. 5 zeigt eine alternative Ausführungsform für den Schlitz 66. Wie zu erkennen ist, endet der Schlitzabschnitt 71 in einer Öffnung, die die Kontur des Querschnitts des Verankerungszapfens 59 hat, wobei die längere Achse des Querschnittsprofils gegenüber der Längsachse des Schlitzabschnittes 71 gekippt ist. Die Achse ist so gestellt, dass aufgrund der Vorspannung der Feder 54 die Flachseite 62 gegen eine Übergangsschulter 77 anliegt, die sich am Übergang von dem Schlitzabschnitt 71 zu der Öffnung 76 ergibt.

Die Montage der beschriebenen Anordnung sieht grundsätzlich folgendermaßen aus: nach dem Anbringen der Rollobahn 22 an dem Wickelwellenrohr 48 wird die Feder 74 durch Drehen des zuvor montierten Lagerstücks 50 gespannt, und zwar so, dass das Wickelwellenrohr 48 bestrebt ist, sich gegenüber dem Lagerstück 50 im Sinne des Aufwickelns der Rollobahn 22 zu drehen.

Nachdem die richtige Vorspannung erzielt ist, werden die in dem Wickelwellenrohr 48 enthaltene Bohrung und die Bohrung 73 in dem Lager 50 fluchtend zueinander ausgerichtet und der Sicherungsstift 74 wird eingesteckt. Bei der Montage im Fahrzeug oder einem entsprechenden vorbereiteten Montagerahmen, der als ganzes einegesetzt wird, wird bei der Montage der Wickelwelle 25 zunächst einmal mit schräg gestellter Wickelwelle 25 der Zapfen 38 in die zugehörige Lagerbohrung eingesteckt. Sodann wird am anderen Ende der Verankerungszapfen 59 von dem offenen Schlitzende 67 her in den Schlitz 66 eingeführt, bis er durch leichtes Drehen der Wickelwelle in den Schlitzabschnitt 72 gelangt. Sobald dies erreicht ist, wird der Sicherungsstift 74 gezogen, womit der Federmotor frei gegeben wird.

Je nachdem wie die sonstigen Einbauverhältnisse aussehen, kann nun die Rollobahn von der Wickelwelle abgezogen werden und es werden die Gleitstücke 37 in die freien Enden der Führungsschienen 27 und 28 eingefädelt.

Zufolge der Vorspannung der Schraubenfeder 54 wird in jeder Stellung der Verankerungszapfen 59 in dem Schlitzabschnitt 72 gegen dessen flanke anliegend gehalten. Da die Schlitzweite an den Abstand der beiden Flachseiten 61 und 62 angepasst ist und kleiner ist als der Abstand, den die beiden Seitenflächen 63, 64 voneinander haben. Kann sich der Verankerungszapfen 59 in dem Abschnitt 72 nicht drehen.

Sinngemäß dieselbe Situation stellt sich bei der Anordnung nach Fig 5 ein.

Die erläuterten Lagerungsarten für das rechte Ende der Wickelwelle 25 können auch auf der anderen Seite anstelle des zylindrischen Zapfens 38 verwendet werden.

Ferner ist für den Fachmann ohne weiteres erkennbar, dass der Einsatz der beschriebenen Rolloanordnung nicht auf Dachfenster beschränkt ist. Die Rolloanordnung kann an allen übrigen Fenstern des Kraftfahrzeugs in sinngemäß der gleichen Weise eingesetzt werden.

Ein Fensterrollo, insbesondere ein Dachfensterrollo weist eine Wickelwelle auf, die auf einem Lagerstück drehbar gelagert ist. An dem Lagerstück ist der Federmotor zum Vorspannen der Wickelwelle verankert. Das Lagerstück ist mit einem flachkantigen Zapfen versehen, der in einen an einem Ende offenen Schlitz eingeführt wird. Durch die Kraft des Federmotors wird der Zapfen gegen das geschlossene Ende des Schlitzes dauerhaft und klapperfrei festgehalten.

## Patentansprüche

1. Rolloanordnung (24) für Dach- oder Seitenfenster an Kraftfahrzeugen (1),
mit einer Rollobahn (22),
mit einem Auszugsprofil (23), das an einer Kante () der Rollobahn (22) befestigt ist,
mit einer Wickelwelle (25), an der die Rollobahn (22) mit einer anderen Kante () befestigt ist,
mit einem in der Wickelwelle (25) untergebrachten Federmotor (54), der mit seinem in der Wickelwelle (25) liegenden Ende () an der Wickelwelle (25) verankert ist,
mit einem Lagerstück (50), das als Drehlager für die Wickelwelle (25) dient, an dem der Federmotor (54) einends verankert ist und das einen über die Wickelwelle (25) überstehenden profilierten vorzugsweise seitlich abgeflachten Zapfen (59) aufweist, und
mit einem Halter (65), der in dem Kraftfahrzeug (1) anbringbar ist und der einen Schlitz (66) aufweist,
- der ein geschlossenes Ende (68,76) und ein offenes Ende (67) aufweist,
- dessen Weite an die Dicke des profilierten vorzugsweise seitlich abgeflachten Zapfens (59) angepasst ist,
- in dem der Zapfen (59) auf Grund seines Querschnitts derart festgelegt ist, dass der Halter (65) als Drehwiderlager für den Federmotor (54) wirken kann, und
- der für den Zapfen (59) einen Anschlag bildet, der in Richtung des Laufwegs der Rollobahn (22) zeigt, wenn die Rollobahn (22) entgegen der Wirkung des Federmotors (54) abgezogen wird, derart, dass der Zapfen (59) durch die Vorspannung des Federmotor (54) in dem Schlitz (66) gegen den Anschlag (68,76) anliegend gehalten wird.

2. Rolloanordnung nach Anspruch 1, **dadurch gekennzeichnet, dass** für das Auszugsprofil (23) eine von dem Federmotor (54) nicht überwindbare Anschlageinrichtung (39) vorgesehen ist, die die Einzugsbewegung der Rollobahn (22) begrenzt.

3. Rolloanordnung nach Anspruch 1, **dadurch gekennzeichnet, dass** das andere Ende der Wickelwelle (25) mit einem komplementären Lagerstück (59) und einem komplementären Halter (65) sowie einem weiteren Federmotor (54) versehen ist.

4. Rolloanordnung nach Anspruch 1, **dadurch gekennzeichnet, dass** das andere Ende der Wickelwelle (25) einen rotationssymmetrischen Zapfen (38) aufweist, der in einer kreisrunden Lagerbohrung () aufgenommen ist.

5. Rolloanordnung nach Anspruch 1, **dadurch gekennzeichnet, dass** die Rollobahn (22) einen an die Grundgestalt des Dach- oder Seitenfensters (21) angepassten Zuschnitt aufweist.

6. Rolloanordnung nach Anspruch 1, **dadurch gekennzeichnet, dass** beidseits der Rollobahn (22) Führungsschienen (27,28) vorgesehen sind, mittels derer das Auszugsprofil (23) geführt ist.

7. Rolloanordnung nach Anspruch 1, **dadurch gekennzeichnet, dass** das Auszugsprofil (23) längenverstellbar ist.

8. Rolloanordnung nach Anspruch 1, **dadurch gekennzeichnet, dass** dem Auszugsprofil (23) eine auf einem Elektromotor (26) basierende Antriebseinrichtung () zugeordnet ist, um das Auszugsprofil (23) entgegen der Wirkung des Federmotors (54) von der Wickelwelle (25) weg zu bewegen.

9. Rolloanordnung nach Anspruch 1, **dadurch gekennzeichnet, dass** der Halter (65) mit der benachbarten Führungsschiene (28) verbunden ist.

10. Rolloanordnung nach Anspruch 1, **dadurch gekennzeichnet, dass** der seitlich abgeflachte Zapfen (59) einen Querschnitt aufweist, der sich zwei zueinander parallelen geraden Kanten (61,64) und quer dazu liegenden Begrenzungslinien (63,64) zusammensetzt, wobei der Abstand der geraden Kanten (61,62) kleiner ist als der Abstand der Begrenzungslinien (63,64) voneinander.

11. Rolloanordnung nach Anspruch 10, **dadurch gekennzeichnet, dass** die in Querrichtung liegenden Begrenzungslinie (63,64) des Querschnittsprofils Ausschnitte aus einem gemeinsamen Kreis sind.

12. Rolloanordnung nach Anspruch 1, **dadurch gekennzeichnet, dass** der Schlitz (66) der Schlitz einer Nut ist.

13. Rolloanordnung nach Anspruch 1, **dadurch gekennzeichnet, dass** der Schlitz (66) sich aus einem an das offene Schlitzende (67) anschließenden Abschnitt (71) und einem gegenüber diesem Abschnitt (71) abgewinkelten kurzen Abschnitt (72) zusammensetzt, wobei die Länge des kurzen Abschnittes (72) im wesentlichen mit der langen Querschnittsachse () des Zapfens(59) übereinstimmt.

14. Rolloanordnung nach Anspruch 1, **dadurch gekennzeichnet, dass** der Schlitz (71) an seinem geschlossenen Ende in einer Öffnung (76) endet, die nach beiden Seiten über die Schlitzränder () übersteht.

15. Rolloanordnung nach Anspruch 1, **dadurch gekennzeichnet, dass** dem Lagerstück (50) eine willkürlich und dauerhaft lösbare Blockiereinrichtung (73,74) zugeordnet ist.

16. Rolloanordnung nach Anspruch 15, **dadurch gekennzeichnet, dass** die Blockiereinrichtung (73,74) eine Öffnung (73) in dem Lagerstück (50), eine damit korrespondierende Öffnung in der Wickelwelle (25) und einen durch beide führenden entnehmbaren Zapfen (74) umfasst.
